# EUROPEAN PATENT APPLICATION

(11) **EP 2 703 619 A1**
(43) Date of publication of application: **05.03.2014**
(21) Application number: 12182629.1
(22) Date of filing: 31.08.2012
(51) Int. Cl.: F02B 37/18, F02B 37/16, F02C 9/18

(54) **Exhaust gas stub for internal combustion engines**

(71) Applicant: Caterpillar Motoren GmbH & Co. KG, 24159 Kiel (DE)
(72) Inventor: Bakindi, Bilal, 24159 Kiel (DE); Rebelein, Werner, 24159 Kiel (DE)
(74) Representative: Kramer - Barske - Schmidtchen

(57) **Abstract**

An internal combustion engine comprising a wastegate system (70) configured to direct exhaust gas around a turbine (32, 42) of a turbocharger (30, 40) and a blow-off system (80) configured to blow-off air out of an intake manifold (12, 22) may further comprise at least one exhaust gas stub (50, 60). The at least one exhaust gas stub (50, 60) may comprise a main body defining a main exhaust gas path and including an inlet and an outlet disposed opposite to the inlet. The inlet may be configured to fluidly connect to the turbine. The at least one exhaust gas stub (50, 60) may further comprise a first inflow (152) fluidly connected to the main exhaust gas path and configured to direct exhaust gas from the wastegate system into the main exhaust gas path, and a second inflow (82) fluidly connected to the main exhaust gas path and configured to direct air from the blow-off system (80) into the main gas path.

## Description

### Technical Field

The present disclosure generally relates to an exhaust gas stub of an internal combustion engine. Particularly, the present disclosure relates to an exhaust gas stub being configured to receive exhaust gas from a wastegate system and intake air of an air system of an internal combustion engine.

### Background

Exhaust gas stubs of internal combustion engines may be used for directing the exhaust gas from a turbine of a turbocharger into, for example, an exhaust gas treatment system or into the environment.

Simultaneously, in the case when the internal combustion engine may comprise a wastegate system for directing the exhaust around the turbine and/or a blow-off system for blowing off air out of the intake manifold, the exhaust gas directed by the wastegate system and/or the air directed by the blow-off system may be separately released into the environment

The present disclosure is directed, at least in part, to improving or overcoming one or more aspects of prior systems.

### Summary of the Disclosure

According to a first aspect of the present disclosure, an exhaust gas stub of an internal combustion engine including a wastegate system and a blow-off system may comprise a main body defining a main exhaust gas path. The main body may comprise an inlet and an outlet disposed opposite to the inlet. The inlet may be configured to fluidly connect to a turbine of a turbocharger of the internal combustion engine. The herein disclosed exhaust gas stub may further comprise a first inflow fluidly connected to the main exhaust gas path and configured to direct exhaust gas from the wastegate system into the main exhaust gas path, and a second inflow fluidly connected to the main exhaust gas path and configured to direct compressed air from the intake manifold into the main gas path.

According to another aspect of the present disclosure, an internal combustion engine including at least one cylinder may comprise at least one intake manifold fluidly connected to the at least one cylinder, at least one exhaust manifold fluidly connected to the at least one cylinder, at least one turbocharger including a turbine fluidly connected to the exhaust manifold , and a compressor fluidly connected to the intake manifold, a wastegate system fluidly connected to the at least one exhaust manifold, a blow-off system fluidly connected to the at least one intake manifold, and at least one exhaust gas stub according to the present disclosure. The exhaust gas stub may be fluidly connected to the turbine and may be configured to receive exhaust gas from the turbine and the wastegate system and air from the blow off system.

According to another aspect of the present disclosure, a method for operating an internal combustion engine including at least one turbocharger having a turbine, a wastegate system for directing exhaust gas, a blow-off system for directing air, and at least one exhaust gas stub fluidly connected to the turbine may comprise directing exhaust gas through the turbine into the at least one exhaust gas stub, directing exhaust gas from the wastegate system into the at least one exhaust gas stub thereby bypassing the turbine, and directing air from the blow-off system into the at least one exhaust gas stub.

In some embodiments, for example, in the case of a V-type internal combustion engine, the first inflow may be disposed at the main body opposite to the second inflow. In yet some embodiments, for example, in the case of an in-line internal combustion engine, the first inflow may be arranged in parallel to the second inflow.

In some embodiments, the exhaust gas stub may be made of a structural steel, such as EN 10025-S235JRG2. In yet some embodiments, the exhaust gas stub may be made of a heat-resisting stainless steel, such as steel having the material number 1.5415.

In some embodiments, in the case of, for example V-type internal combustion engine comprising a first cylinder bank having at least one cylinder and a second cylinder bank having at least one cylinder, the V-type internal combustion engine may comprise a first exhaust gas stub according to the present disclosure, and a second exhaust gas stub according to the present disclosure. The first exhaust gas stub may be fluidly connected to a first turbine of a first turbocharger configured to compress air for the at least one cylinder of the first cylinder bank. The second exhaust gas stub may be fluidly connected to a second turbine of a second turbocharger configured to compress air for the at least one cylinder of the second cylinder bank. Furthermore, the first exhaust gas stub may be configured to receive exhaust gas from the first turbine and the wastegate system and air from the blow-off system, and the second exhaust gas stub may be configured to receive exhaust gas from the second turbine and the wastegate system and air from the blow-off system.

Other features and aspects of this disclosure will be apparent from the following description and the accompanying drawings.

### Brief Description of the Drawings

Fig. 1 is a schematic top view of a V-type internal combustion engine with separate exhaust gas flow for each cylinder bank.
Fig. 2 is a perspective cut view of a throttle valve with a valve plate.
Fig. 3 is a side view of the throttle valve of Fig. 2 with a control system for operating the throttle valve.
Fig. 4 is a perspective view of a coupling mechanism of the control system of Fig. 3.
Fig. 5 is a perspective view of an exhaust gas line of a wastegate system of the V-type internal combustion engine of Fig.1.
Fig. 6 is a perspective view of an exhaust gas stub of the V-type internal combustion engine of Fig. 1.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that directing exhaust gas passing through a turbocharger, exhaust gas passing through a wastegate system and/or air passing through a blow-off system into an exhaust gas stub may reduce, for example, the number of interfaces at the internal combustion engine.

The present disclosure may be further based on the realization that providing an exemplary disclosed exhaust gas that may facilitate handling of wastegate exhaust gas and blow-off air, as both the wastegate exhaust gas and blow-off air may be directed into a common device, namely the exhaust gas stub, and may then be released into, for instance, the environment.

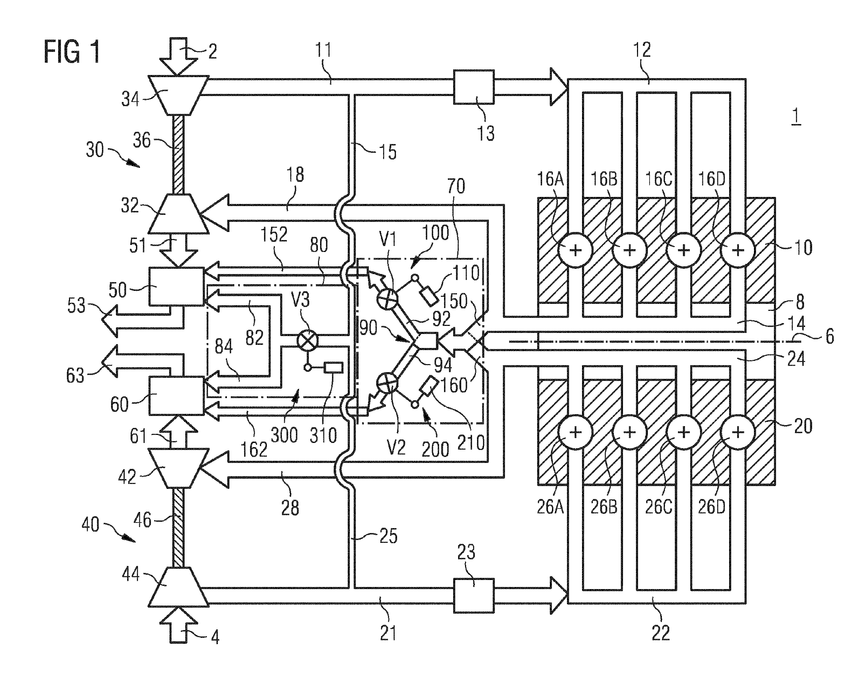

Referring now to the drawings, an exemplary embodiment of an internal combustion engine 1 is illustrated in Fig. 1. The internal combustion engine 1 may include features not shown, such as fuel systems, air systems, cooling systems, peripheries, drivetrain components, etc. For the purposes of the present disclosure, the internal combustion engine 1 is considered a four-stroke V-type internal combustion engine. One skilled in the art will recognize, however, that the internal combustion engine 1 may be any type of engine (turbine, gas, diesel, natural gas, propane, dual fuel etc.). Furthermore, the internal combustion engine 1 may be of any size, with any number of cylinders, and in any configuration ("V," in-line, radial, etc.). The internal combustion engine 1 may be used to power any machine or other device, including locomotive applications, on-highway trucks or vehicles, off-highway trucks or machines, earth moving equipment, generators, aerospace applications, marine applications, pumps, stationary equipment, or other engine powered applications.

Exemplary embodiments of a control system for operating a throttle valve are described in the following with reference to the drawings.

With respect to Fig. 1, an internal combustion engine 1, such as a V-type 8-cylinder dual fuel engine, may comprise an engine block including a first cylinder bank 10 and a second cylinder bank 20, at least one fuel tank (not shown), a first turbocharger 30 for the first cylinder bank 10, a second turbocharger 40 for the second cylinder bank 20, and an air system. The engine block may include a crankcase within which a crankshaft 6 may be supported. The crankshaft 6 is indicated by a dotdashed line in Fig. 1. The crankshaft 6 may be connected to pistons (not shown), which may be movable within respective cylinders 16A to 16D of the first cylinder bank, and within respective cylinders 26A to 26D of the second cylinder bank 20 during operation of the dual fuel internal combustion engine 1.

A first intake manifold 12 may be fluidly connected to each of the cylinders 16A to 16D of the first cylinder bank 10. Each of the cylinders 16A to 16D may be provided with at least one inlet valve (not shown), which may be adapted to open or close the fluid connection between the first intake manifold 12 and a working chamber of the respective cylinders 16A to 16D.

A second intake manifold 22 may be fluidly connected to each of the cylinders 26A to 26D of the second cylinder bank 20. Each of the cylinders 26A to 26D may be provided with at least one inlet valve (not shown), which may be adapted to open or close the fluid connection between the second intake manifold 22 and a working chamber of the respective cylinder 26A to 26D.

A first exhaust manifold 14 may be provided, which may be connected to each of the cylinders 16A to 16D of the first cylinder bank 10. Each of the cylinders 16A to 16D may be provided with at least one exhaust valve (not shown) configured to open and close the fluid connection between the working chambers of the respective cylinders 16A to 16D and the first exhaust manifold 14.

A second exhaust manifold 24 may be provided, which may be connected to each of the cylinders 26A to 26D of the second cylinder bank 20. Each of the cylinders 26A to 26D may be provided with at least one exhaust valve (not shown) configured to open and close the fluid connection between the working chambers of the respective cylinders 26A to 26D and the second exhaust manifold 24.

As schematically illustrated in Fig. 1, the first and second exhaust manifolds 14 and 24 may be arranged within an inner portion 8 of the internal combustion engine 1. The inner portion 8 may be a portion between the first cylinder bank 10 and the second cylinder bank 20 being disposed at an angle with respect to the first cylinder bank 10, thereby forming the typical V-shape.

Generally, when the internal combustion engine 1 is operated, charge air may be introduced into the cylinders 16A to 16D of the first cylinder bank 10 and into cylinders 26A to 26D of the second cylinder bank 20 through the first and second intake manifolds 12, 22. After combustion, exhaust gases generated by the combustion process may be released from the cylinders 16A to 16D, 26A to 26D through the first and second exhaust manifolds 14, 24, respectively.

Generally, the first and second turbochargers 30, 40 may be applied to use the heat and pressure of the exhaust gas of the internal combustion engine 1 to drive compressors 34, 44 for compressing the charge air for the internal combustion engine 1. Specifically, the exhaust gas passing the turbines 32, 42 of the turbochargers 30, 40 may rotate the turbines 32, 42 thereby decreasing in pressure and temperature. The compressors 34, 44 of the turbochargers 30, 40 may be rotatable connected via common shafts 36, 46 with the turbines 32, 42 and may be driven by the turbines 32, 42.

An inlet of the first compressor 34 may be configured to suck in charge air for the combustion process through a first main air pipe 2 being fluidly connected to the air system (not shown). Generally, an outlet of the first compressor 34 may be fluidly connected via a first air connection 11 with an inlet of the first intake manifold 12. As shown in Fig. 1, the outlet of the first compressor 34 may be connected via a first cooler 13 to an inlet of the first intake manifold 12 being configured to distribute the charge air to the cylinders 16A to 16D of the first cylinder bank 10.

Similarly, an inlet of the second compressor 44 may be configured to suck in charge air for the combustion process through a second main air pipe 4 being fluidly connected to the air system (not shown). Generally, an outlet of the second compressor 44 may be fluidly connected via a second air connection 21 with an inlet of the second intake manifold 22. As also shown in Fig. 1, the outlet of the second compressor 44 may be connected via a second cooler 23 to an inlet of the second intake manifold 22 being configured to distribute the charge air to the cylinders 26A to 26D of the second cylinder bank 20.

Thus, the charge air provided for the combustion process may be compressed prior to introduction into the engine cylinders 16A to 16D, 26A to 26D using the first and second turbochargers 30, 40.

During operation of the internal combustion engine 1, the charge air is compressed and cooled before charging of the cylinders 16A to 16D, 26A to 26D. Within the cylinders 16A to 16D, 26A to 26D, further compression and, therefore, heating of the charge air may be caused through the movement of the pistons. Then, an appropriate amount of fuel, for instance diesel oil, marine diesel oil, heavy fuel oil, gas, natural gas, propane, or a mixture thereof may be injected into the cylinders 16A to16F. Therein, the fuel may be combusted with the compressed charged air and produce exhaust gases, which may be discharged via the first and second exhaust manifolds 14, 24.

For medium speed large internal combustion engines, the first and second compressors 34, 44 may compress the charge air to, for instance, 7 to 8 bar at a temperature of 180°C and the first and second cooler 13, 23 may cool the charge air from, for example, about 180°C to 45°C. After combustion, the exhaust gas may have a pressure of about 5 to 6 bar at a temperature in the range of, for instance, about 450°C to 600°C. Within a first turbine connection 18 and a second turbine connection 28, the pressure may drop to 3 to 4 bar and a temperature in the range of, for example, about 350°C to 450°C. After the first and second turbines 32, 42 the temperature at ambient pressure may be in the range of or below, for example, 250°C.

An outlet of the first exhaust manifold 14 may be fluidly connected to an inlet of the first turbine 32 via the first turbine connection 18. An outlet of the turbine 32 may be fluidly connected to a first exhaust gas stub 50 configured to release the exhaust gas, for example, into an exhaust treatment system (not shown) or directly into the environment via an exhaust pipe 53.

An outlet of the second exhaust manifold 24 may be fluidly connected to an inlet of the second turbine 42 via the second turbine connection 28. An outlet of the turbine 42 may be fluidly connected to a second exhaust gas stub 60 configured to release the exhaust gas, for example, into an exhaust treatment system (not shown) or directly into the environment via an exhaust pipe 63.

The above described cycle may be repeated continuously as long as the internal combustion engine 1 continues to run.

During operation of the internal combustion engine 1, the first and second compressors 34, 44 may be driven by the first and second turbines 32, 42 in a controlled manner as the amount of exhaust gas provided to the first and second turbines 32, 42 may be controlled, for example, via a wastegate system 70 fluidly connecting the first and second exhaust manifolds 14, 24 to the first and second exhaust gas stubs 50, 60, respectively.

As a V-type internal combustion engine is illustrated in Fig. 1, the engine 1 may be provided with respective intake manifolds 12, 22, respective exhaust manifolds 14, 24, respective turbochargers 30, 40, and respective exhaust pipes 18, 28 for each cylinder bank 10, 20. However, a person skilled in the art will recognize that in the case of, for example, an in-line type internal combustion engine, only one intake manifold, only one exhaust manifold, and only one turbocharger with respective exhaust pipes may be provided.

The wastegate system 70 may be configured to direct the exhaust gas around the first and second turbines 32, 42, which means that the exhaust gas may bypass the first and second turbines 32, 42. For example, in the case that the intake air shall not be strongly compressed, bypassing the first and second turbines 32, 42 may reduce compression of the intake air, as the first and second compressors 34, 44 may not be strongly operated by the first and second turbines 32,42.

As illustrated in Fig. 1, the wastegate system 70 may be fluidly connected to the first exhaust manifold 14 via a first bypass pipe 150, and to the second exhaust manifold 24 via a second bypass pipe 160. As illustrated in Fig. 1, the first bypass pipe 150 may be above the second bypass pipe 160, as indicated by dotted lines showing the pathway of the second bypass pipe 160 underneath the first bypass pipe 150.

The first and second bypass pipes 150, 160 may be fluidly connected to an exhaust gas line 90 comprising a first duct 92 and a second duct 94 being disposed underneath the first duct 92 (also indicated by dotted lines). Specifically, the first bypass pipe 150 may be fluidly connected to the first duct 92, and the second bypass pipe 160 may be fluidly connected to the second duct 94.

The wastegate system 70 may further comprise a first throttle valve V 1 fluidly connected to the first duct 92, and a second throttle valve V2 fluidly connected to the second duct 94. A skilled person will recognize that the first and second throttle valves V1, V2 may be operated as wastegates, thereby controlling the amount of exhaust gas bypassing the turbines 32 and 42, which in turn may indirectly control the amount of exhaust gas directed to the first and second turbines 32 and 42.

A first exhaust pipe 152 may fluidly connect the first duct and, thus, the first throttle valve V1 to the first exhaust gas stub 50 fluidly connected to the outlet pipe 51 of the first turbine 32. Similarly, a second exhaust pipe 162 may fluidly connect the second duct 94 and, thus, the second throttle valve V2 to the second exhaust gas stub 60 fluidly connected to the outlet pipe 61 of the second turbine 42.

After passing the first and second exhaust gas stubs 50, 60, the exhaust gas may be directed into respective exhaust gas treatment systems prior to releasing into the environment. In some embodiments, the exhaust gas may be combined and, subsequently, may be directed into a common exhaust gas treatment system. Alternatively, the exhaust gas may be directly released into the environment after passing the first and second exhaust gas stubs 50, 60.

As also depicted in Fig. 1, the internal combustion engine 1 may further comprise a blow-off system 80 comprising a third throttle valve V3, a first blow-off pipe 15, a second blow-off pipe 25, a first air pipe 82, and a second air pipe 84. The first blow-off pipe 15 may be fluidly connected to the first air connection 11, and the second blow-off pipe 25 may be fluidly connected to the second air connection 21. Furthermore, the first and second blow-off pipes 15, 25 may be both fluidly connected to the third throttle valve V3. The first and second air pipes 82, 84 may fluidly connect the third throttle valve V3 to the first and second exhaust gas stubs 50, 60, respectively.

The third throttle valve V3 may be configured to operate as a blow-off valve. A blow-off valve may blow-off compressed air out of the first and second air connections 11, 21 including intake air compressed by, for example, the first compressor 34 and/or the second compressor 44. In the case of, for instance, a pressure within the first and second air connections 11, 21 exceeding a predetermined threshold, the third throttle valve V3 may be operated to open for relieving the first and second air connections 11, 21 by blowing-off compressed intake air. Also for having a predetermined air - fuel ratio to be combusted within the cylinders 16A to 16D, 26A to 26D, the blow-off system may support in reaching the desired air - fuel ratio

As shown in Fig. 1, the exemplary disclosed V-type dual fuel internal combustion engine 1 may comprise two wastegate valves V1, V2 and one blow-off valve V3. Each of the two wastegate valves V1, V2 may separately direct the exhaust gas bypassing the turbines 32, 42 into respective exhaust gas stub 50, 60. The skilled person will recognize that, in the case of, for instance, an in-line type internal combustion engine, only one wastegate valve may be provided for bypassing the turbocharger. In yet some embodiments, the blow-off system 80 including the blow-off valve V3 may be optionally provided.

Each of the first, second and third throttle valves V1, V2, V3 may be independently controlled by respective actuators 110, 210, 310. The actuators 110, 210, 310 may be controlled by an engine control unit (not shown) and may control operation of the throttle valves V1, V2, V3 by respective control systems 100,200,300.

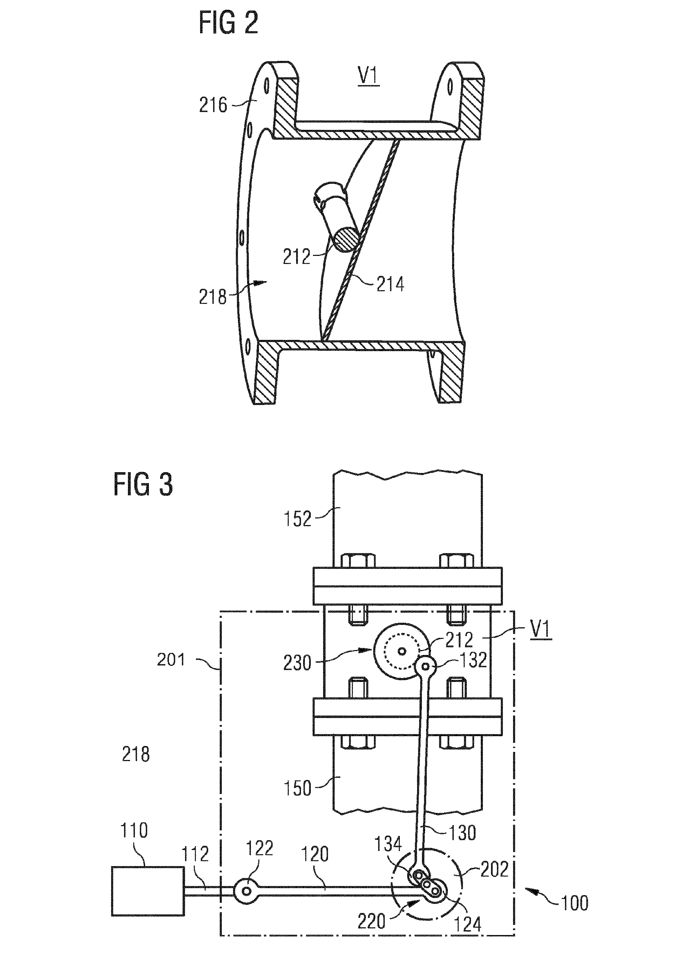

As schematically illustrated in Fig. 1, the first, second and third throttle valves V1, V2, V3 may be operated by respective control systems 100, 200, 300, which will be described with reference to Figs. 2 to 4 in greater detail. Although, Figs. 2 to 4 depict a first control system 100 for operating the first throttle valve V1, the same control principle may also apply to the second and third control systems 200, 300.

Turning to Fig. 2, the throttle valve V1 and the control system 100 may form a throttle valve assembly. The throttle valve V1 may comprise a main body 216 defining a gas path 218, a pivotable valve shaft 212 extending into the gas path 218, and a valve plate 214 mounted to the valve shaft 212 and being pivotable within the gas path 218 by pivoting the valve shaft 212. In some embodiments, the valve shaft 212 may, for example, perpendicularly extend into the gas path 218.

As shown in Fig. 2, the valve plate 214 may be in a closed position, thereby restricting the gas from flowing through the throttle valve V1. When being pivoted, for example, in a clockwise direction, the valve plate 214 may at least partially open the gas path 218 through the throttle valve V1, thereby enabling the gas to pass therethrough.

The control system 100 may be used for pivoting the valve shaft 212 and, thus, the valve plate 214 (see Fig. 3). The control system 100 may comprise the actuator 110 configured to generate a linear and reciprocating motion, and a transform mechanism 201 configured to couple the actuator 110 to the valve shaft 212 from, for instance, the outside of the throttle valve V1, and to transform the linear motion generated by the actuator 110 into a rotational motion of the valve shaft 212.

The actuator 110 may be an electronically controlled actuator comprising an actuator rod 112 being reciprocally moved back and forth. A reciprocating motion may, for instance, include a linear motion of the actuator rod 112. As can be seen in Fig. 3, the actuator 110 may be disposed spaced apart from the throttle valve V1. Therefore, the actuator 110 may not be exerted to heat originating from, for example, hot exhaust gases flowing through the throttle valve V1. Furthermore, as the space at the internal combustion engine 1, especially the space at the throttle valves is limited, the actuator 110 may be arranged at any appropriate location at the internal combustion engine 1. By providing the control system 100, the throttle valve V1 may still be operated by the actuator 110 via the transform mechanism 201.

The transform mechanism 201 may comprise a first control rod 120 having a first end 122 and a second end 124, a second control rod 130 having a first end 132 and a second end 134, and a coupling unit 220 configured to mechanically couple the first control rod 120 to the second control rod 130.

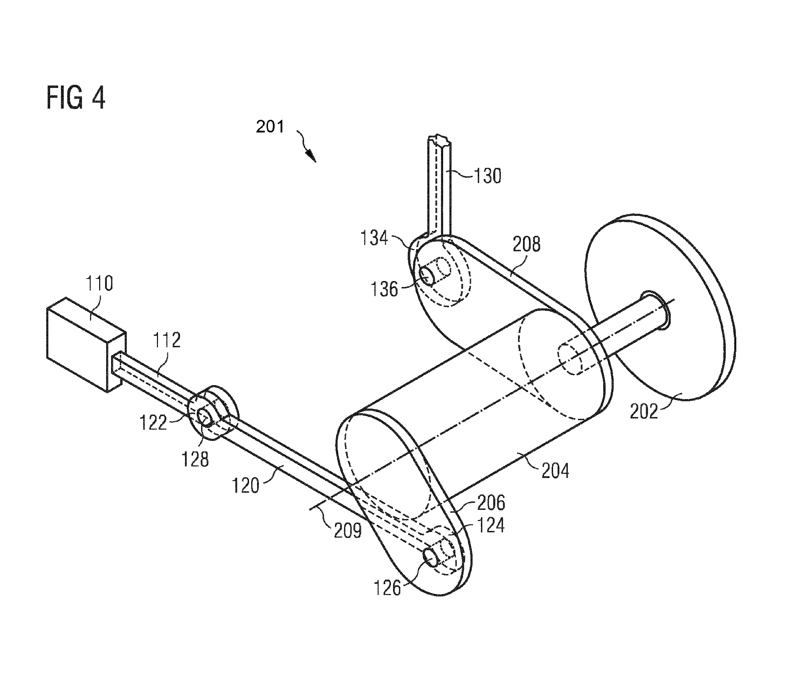

The first end 122 of the first control rod 120 may be coupled to the actuator rod 112 of the actuator 110 via a joint 128 (see Fig. 4). The second end 124 of the first control rod 120 may be coupled to the coupling unit 220 via a joint 126.

The transform mechanism 201 may further comprise a turning device 230 configured to be coupled to the valve shaft 212. The first end 132 of the second control rod 130 may be eccentrically coupled the turning device 230. The second end 134 of the second control rod 130 may be coupled to the coupling unit 220 via a joint 136.

As illustrated in Fig. 3, the actuator 110 may generate a linear motion of the actuator rod 112 in, for example, a left direction. Subsequently, due to the connection between the actuator rod 112 and the first control rod 120, the actuator rod 112 may pull the first control rod 120 into the left direction. Simultaneously, the first actuator rod 120 may cause the coupling unit 220 to rotate in a clockwise direction, thereby pushing the second control rod 130 in an upward direction. This upward movement of the second control rod 130 may, due to the eccentrically connection of the second control rod 130 to the turning device 230, cause the turning device 230 to rotate in a counter-clockwise direction, thereby rotating the valve shaft 212 and the valve plate 212 also in a counter-clockwise direction and, for instance, opening the gas path 218 of the throttle valve V1.

In the case when the actuator 110 may generate a linear motion of the actuator rod 112 in, for example, a right direction of Fig. 3, the valve shaft 212 and the valve plate 214 may be rotated in a clockwise direction, thereby, for example, closing the gas path 218 of the throttle valve V1. The skilled person will recognize that in this case the motions of the control rods 120, 130, the coupling unit 220, and the turning device 230 may be reversed compared to the actuator rod 112 moving to the left.

As further shown in Fig. 3, the first control rod 120 may be substantially perpendicularly arranged with respect to the second control rod 130. However, the angle between the first and second control rods 120, 130 may be any appropriate angle for smoothly controlling the throttle valve V1.

In some embodiments, the actuator 110 may be coupled to a single control rod, which in turn may be eccentrically coupled to the turning device 230. In such embodiments, a coupling unit 220 and a second control rod 130 may not be necessary.

The actuator 110 may be controlled by an engine control unit (not explicitly shown in the drawings). The engine control unit may control the throttle valves V1, V2, V3 for adjusting the air -fuel ratio within the cylinders 16A to 16D, 26A to 26D of the internal combustion engine 1 (which may be described in more detail later).

Referring to Fig. 4, a transform mechanism 201 comprising an exemplary embodiment of a coupling unit 220 is shown in greater detail. The coupling unit 220 may comprise a pivot pin 204 including a first lobe 206, a second lobe 208, and an axis of rotation 209. The pivot pin 204 being pivotable about the axis of rotation 209 may be rotatable mounted to a base plate 202 via a pin 205.

As illustrated in Fig. 4, the second end 124 of the first control rod 120 may be eccentrically coupled (with respect to the axis of rotation 209) to the first lobe 206 via the joint 126. On the other side of the pivot pin 204, the second end 134 of the second control rod 130 may be eccentrically coupled (with respect to the axis of rotation 209) to the second lobe 208 via the joint 136.

The first lobe 206 may radially extend from the pivot pin 204 at a first direction, and the second lobe 208 may radially extend from the pivot pin 204 at a second direction. In some embodiments, the first direction may be opposed to the right direction. In yet some embodiments, the first direction may be identical to the second direction, and in yet some embodiments, the first direction and the second direction may extend at an angle between the same when seen along the axis of rotation 209.

By providing a pivot pin 204 according the embodiment of Fig. 4, it may be possible to transform a linear motion of the actuator rod 112 into a rotational motion of the pivot pin 204. Subsequently, the rotational motion of the pivot pin 204 may be further transferred into a linear motion of the second control rod 130, which may be transformed into a rotational motion of the valve shaft 212 and, thus, of the valve plate 214.

In due consideration of Fig. 4 illustrating an exemplary embodiment of the coupling unit 220, the turning device 230 may comprise a similar construction. In such embodiments of the turning device 230, the pin 205 may be rigidly coupled to the valve shaft 212, such that a rotation of the pivot pin 204 may cause the valve shaft 212 to rotate in a clockwise or counter-clockwise direction. In such embodiments, the skilled person will recognize that the pivot pin 204 may comprise only one lobe 206, and the second lobe 208 may not be necessary.

In some embodiments, the turning device 230 may be a pulley centrically coupled to the valve shaft 212. In such embodiments, the second control rod 130 may be eccentrically coupled to the pulley for rotating the same and, thus, for rotating the valve shaft 212.

By providing a coupling unit 220 comprising an exemplary disclosed pivot pin 204, and a turning device 230 having a similar construction, it may be possible to span any axial distances between the actuator 110, the turning device 230, and/or the throttle valve V1.

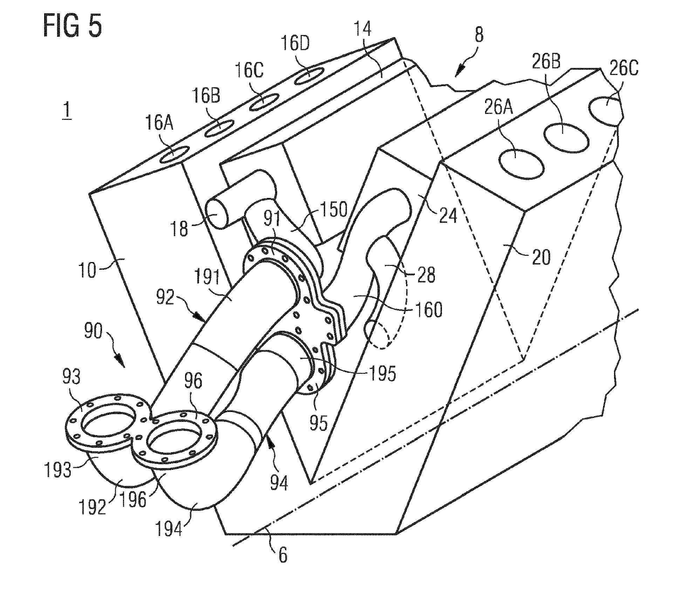

With respect to Fig. 5, the exhaust gas line 90 of Fig. 1 is illustrated in greater detail. The exhaust gas line 90 may be configured to fluidly connect the first bypass pipe 150 with the first exhaust gas pipe 152, and to fluidly connect the second bypass pipe 160 with the second exhaust gas pipe 162. In some embodiments, the exhaust gas line 90 may be configured to be fluidly connected to the first and second throttle valves V1, V2.

As schematically illustrated in Fig. 5, the exhaust gas line 90 may be connected to the first and second exhaust manifolds 14, 24 at the inner portion 8 of the V-type internal combustion engine 1. The exhaust gas line 90 may comprise a first duct 92 and a second duct 94. Particularly, the first duct 92 may fluidly connect the first bypass pipe 150 to the first exhaust gas pipe 152, and the second duct 94 may fluidly connect the second bypass pipe 160 to the second exhaust gas pipe 162. In some embodiments, the exhaust gas line 90 may be fluidly connected to the first and second exhaust manifolds 14, 24, respectively.

The first duct 92 may comprise a first port 91 and a second port 93 being opposite to the first port 91. Furthermore, the first duct 92 may comprise a first pipe section 191 fluidly connected to the first port 91, and a second pipe section 193 fluidly connected to the second port 93. A curved pipe section 192 may be fluidly interconnected between the first pipe section 191 and the second pipe section 193.

The second duct 94 may comprise a first port 95 and a second port 96 being opposite to the first port 95. Furthermore, the second duct 94 may comprise a first pipe section 195 fluidly connected to the first port 95, and a second pipe section 196 fluidly connected to the second port 96. A curved pipe section 194 may be fluidly interconnected between the first pipe section 195 and the second pipe section 196.

As shown in Fig. 5, the first port 91 of the first duct 92 may be disposed above the first port 95 of the second duct 94. In some embodiments, the first port 91 of the first duct 92 may be disposed below the first port 95 of the second duct 94. Such an arrangement of the first ports 91, 95 of the first and second ducts 92, 94 may efficiently use the limited space at the inner portion 8 of the internal combustion engine 1, especially of a V-type internal combustion engine 1 in the region where the first and second cylinder banks 10, 20 may merge, as the axial distance between the first and second cylinder banks 10, 20 may continuously decrease.

The first pipe section 191 of the first duct 92 may be horizontally arranged. The first pipe section 195 of the second duct 94 may also be horizontally arranged, such that the first pipe section 195 of the second duct 94 may be parallel to the first pipe section 191 of the first duct 92.

The second port 93 of the first duct 92 may be disposed besides the second port 96 of the second duct 94. The second pipe section 193 of the first duct 92 may be vertically arranged. The second pipe section 196 of the second duct 94 may also be vertically arranged, such that the second pipe section 196 of the second duct 94 may be parallel to the second pipe section 193 of the first duct 92. Therefore, the first pipe sections 191, 195 may be substantially arranged perpendicular with respect to the second pipe sections 193, 196, such that the curved pipe sections 192, 194 may span an angle of about 90° between the first pipe sections 191, 195 and the second pipe sections 193, 196.

In some embodiments, the first pipe sections 191, 195 of the first and second ducts 92, 94 may not be horizontally arranged. Furthermore, the second pipe section 193, 196 of the first and second ducts 92, 94 may not be vertically arranged. In such embodiments the first pipe section 191, 195 may not be arranged perpendicular with respect to the second pipe sections 193, 196.

The exhaust gas line 90 comprising the first and second ducts 92, 94 may be a cast element and may consist of a material suitable for directing hot gases, such as exhaust gases. For example, the exhaust gas line 90 may be cast from iron cast, such as EN 1561-GJL-250/300.

As further depicted in Fig. 5, the first and second ducts 92, 94 may be tubular in shape and, thus, may comprise a circular cross-section. In some embodiments, the first and second ducts 92, 94 may comprise a rectangular cross-section, an oval-cross-section, a triangular cross-section, or any cross-section appropriate to direct gases, such as exhaust gas.

In some embodiments, the exhaust gas line 90 may comprise a length in a range from, for example, about 50 cm to 90 cm. The first and second ducts 92, 94 may comprise a diameter in a range from, for example, about 10 cm to 20 cm.

After passing through the exhaust gas line 90, particularly through the first duct 92 and the second duct 94, the exhaust gas may be directed to the first and second exhaust gas stubs 50, 60, respectively. As indicated in Fig. 5, the exhaust gas passing through the exhaust gas line 90 may be vertically directed to the first and second exhaust gas stubs 50, 60. This may also contribute to the efficient use of the limited space at the internal combustion engine 1.

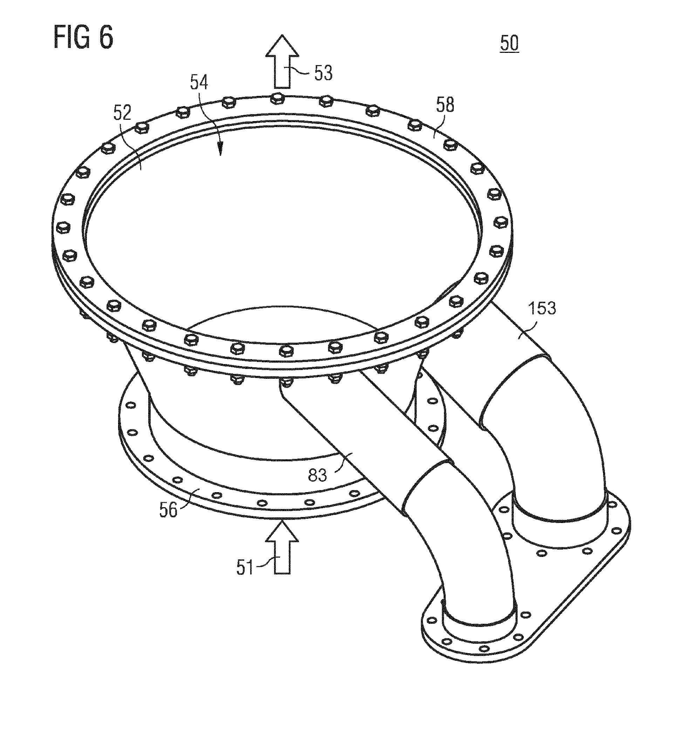

Turning to Fig. 6, the first exhaust gas stub 50 is shown in greater details. The person skilled in the art may recognize that the second exhaust gas stub 60 may comprise a similar assembly as the first exhaust gas stub 50. Therefore, the same features of the first exhaust gas stub 50 described in connection with Fig. 6 may also apply to the second exhaust gas stub 60.

The illustrated exhaust gas stub 50 may comprise a main body 52 defining an exhaust gas path 54. The main body 52 may include an inlet 56 fluidly connected to an outlet pipe 51 and an outlet 58 fluidly connected to an exhaust pipe 53 releasing the exhaust into an associated exhaust gas treatment system or directly into the environment via, for example, a chimney (not shown).

As further depicted in Fig. 6, the exhaust gas stub 50 may comprise a first inflow 153 fluidly connected to the first exhaust gas pipe 152 of the wastegate system 70, and a second inflow 83 fluidly connected to the first air pipe 82 of the blow-off system 80.

The first inflow 153 may be configured to direct the exhaust gas passing through the wastegate system 70 into the exhaust gas path 54. Particularly, the first inflow 153 may direct the exhaust gas passing through the wastegate system 70 back into the main exhaust gas system. The second inflow 83 may be configured to direct the compressed air passing through the blow-off system 80 into the exhaust gas path 54.

The first inflow 153 may be arranged in parallel with respect to the second inflow 83. Such an embodiment may further contribute to efficiently use the limited space at the V-type internal combustion engine 1 of Fig. 1.

For example, in the case of an in-line type internal combustion engine, the first inflow 153 may be substantially disposed opposite to the second inflow 83 with respect to the main body 52.

The exhaust gas stub 50 may be made of, for example, a heat-resisting stainless steel, such as steel having the material number 1.5415. In some embodiments, the exhaust gas stub 50 may be made of a structural steel, such as EN 10025-S235JRG2. The first inflow 153 may have a diameter in a range from about 10 cm to 20 cm, and the second inflow 83 may have a diameter in a range from about 10 cm to 15 cm.

The exhaust gas stub 50 may comprise a length from the inlet 56 to the outlet 58 in a range from, for example, 40 cm to 80 cm. The inlet 56 may comprise a diameter in a range from, for example, about 50 cm to 70 cm, and the outlet 58 may comprise a diameter in a range from, for example, about 80 cm to 100 cm. In some embodiments, the main exhaust gas path 54 may have a cylindrical shape having a diameter in a range from about 60 cm to 110 cm.

### Industrial Applicability

In the following, operation of an internal combustion engine, such as that shown in Fig. 1 is described with reference to the drawings. The internal combustion engine 1 of Fig. 1 may be a V-type dual fuel internal combustion engine running on liquid fuel, such as heavy fuel oil, diesel oil, etc., or on gaseous fuel, such as natural gas, propane, etc. When running on liquid fuel, the V-type dual fuel internal combustion engine 1 may be in a liquid fuel mode (in the following referred to as LFM), and when running on gaseous fuel, the V-type dual fuel internal combustion engine 1 may be in a gaseous fuel mode (in the following referred to as GFM).

Generally, the V-type dual fuel internal combustion engine may be operated in accordance with a lambda control strategy controlling the engine in dependency of a desired air - fuel ratio, such that the amount of air and amount of fuel supplied to each of the cylinders 16A to 16D, 26A to 26D may be controlled to have the desired air - fuel ratio.

When the V-type dual fuel internal combustion engine 1 may be operated in the LFM, a mixture of liquid fuel and compressed air having a predetermined air - fuel ratio may be supplied to and combusted within the cylinders 16A to 16D, 26A to 26D. After combustion, the exhaust gas may be directed into the first exhaust manifold 14 and the second exhaust manifold 24, respectively. Subsequently, the exhaust gas from the first and second exhaust manifolds 14, 24 may be directed to the first and second turbines 32, 42, respectively, for driving the first and second compressors 34, 44, which in turn may compress the intake air supplied to the cylinders 16A to 16D, 26A to 26 via the first and second intake manifolds 12, 22.

After driving the first and second turbines 32, 42, the exhaust gas may pass the first and second exhaust gas stubs 50, 60, respectively, and may then be directed into an associated exhaust gas treatment system (not shown in Fig. 1) or directly into the environment via the exhaust gas pipes 53, 63.

It should be noted that in the LFM, the wastegate system 70 and the blow-off system 80 may not be operated. Therefore, the first, second and third throttle valves V1, V2, V3 may be in a closed position and, thus, may restrict the exhaust gas and the compressed air from passing theretrough.

When the V-type dual fuel internal combustion engine 1 may be operated in the GFM, a mixture of gaseous fuel and compressed air having a desired air - fuel ratio may be supplied to and combusted within the cylinders 16A to 16D, 26A to 26D. In some embodiments, the skilled person will recognize that for initiating the combustion of the gaseous air - fuel mixture, a small amount of liquid fuel called ignition fuel, such as diesel fuel, may be injected into the cylinders 16A to 16D, 26A to 26D to ignite the air - fuel mixture and, thereby, to start the combustion process. After combustion, the exhaust gas may be directed into the first exhaust manifold 14 and second exhaust manifold 24, respectively.

Simultaneously, an engine control unit (not shown in the drawings) may be configured to continuously calculate the desired air - fuel ratio based on, for example, the desired power output of the engine, the accelerator pedal position, manifold pressures, gas pressures, or any other parameters appropriate for calculating the desired air - fuel ratio.

In dependency of the desired air - fuel ratio, the engine control unit may, for example, control the engine components, such as the wastegate system 70 and/or the blow-off system 80. Particularly, the engine control unit may control the first, second and third throttle valves V1, V2, V3. By controlling the throttle valves V1, V2, V3, the amount of exhaust gas passing through the first and second turbines and the amount of compressed air being directed to the first and second intake manifolds 12, 22 may be controlled.

By controlling the amount of exhaust gas driving the first and second turbines 32, 42, the compression of the intake air may be controlled, as the power of the first and second compressors 34, 44 may be controlled by the power of the first and second turbines 32, 42. For controlling the amount of exhaust gas being directed to the fist and second turbines 32, 42, the engine control unit may adjust the positions of the respective valve plates 212 of the first and second throttle valves V1, V2 by actuating the first and second actuators 110, 210. Subsequently, the first and second actuators 110, 210 may generate a liner motion of the actuator rod 112 and the first control rod 120, which may cause the pivot pin 204 to rotate. The rotational motion of the pivot pin 204 may then cause the second control rod 130 to move in an upward or downward direction, which may then cause the turning device 230 being coupled to the valve shaft 212 to rotate the valve shaft 212, thereby adjusting the valve plate position and, thus, the amount of exhaust gas passing through the first and second throttle valves V1, V2.

Similarly, the engine control unit may control the third throttle valve V3, thereby controlling the amount of intake air being directed into the first and second intake manifolds 12, 22 by blowing compressed air out of the first and second air connections 11, 21.

It should be noted that the first, second and third throttle valves V1, V2, V3 may be controlled independently from each other. Therefore, it may be ensured that, for instance, the amount of exhaust gas passing through the first and second turbines 32, 42 may also be controlled independently from each other, which in turn may ensure that the first and second cylinder banks 10, 20 may be controlled independently from each other, as the desired air - fuel ratio for each cylinder bank 10, 20 may be calculated independently from each other.

With respect to Fig. 1, after passing the first and second turbines 32, 42, the wastegate system 70, and the blow-off system 80, the exhaust gas and blow-off air may be commonly directed into the first and second exhaust gas stubs 50, 60, respectively. Subsequently, the exhaust gas and blow-off air may be directed into, for instance, an exhaust gas treatment system or directly into the environment via the exhaust gas pipes 53, 63, respectively.

The disclosed exhaust gas stub may be used at internal combustion engines of middle to large size. In particular, the internal combustion engine 1 may be sized and configured to be used e.g. in vessels, larger ships, or in power plants.

Herein, the term "internal combustion engine" may refer to internal combustion engines which may be used as main or auxiliary engines of stationary power providing systems such as power plants for production of heat and/or electricity as well as in ships/vessels such as cruiser liners, cargo ships, container ships, and tankers. Fuels for internal combustion engines may include diesel oil, marine diesel oil, heavy fuel oil, alternative fuels or a mixture thereof, and natural gas.

In addition, the term "internal combustion engine" as used herein is not specifically restricted and comprises any engine, in which the combustion of a fuel occurs with an oxidizer to produce high temperature and pressure gases, which are directly applied to a movable component of the engine, such as pistons or turbine blades, and move it over a distance thereby generating mechanical energy. Thus, as used herein, the term "internal combustion engine" comprises piston engines and turbines.

Although the preferred embodiments of this invention have been described herein, improvements and modifications may be incorporated without departing from the scope of the following claims.

## Claims

1. An exhaust gas stub (50, 60) of an internal combustion engine (1) including a wastegate system (70) and a blow-off system (80), the exhaust gas stub (50, 60) comprising:
a main body (52) defining a main exhaust gas path (54) and comprising an inlet (56) and an outlet (58) disposed opposite to the inlet (56), the inlet (56) being configured to fluidly connect to a turbine (32, 42) of a turbocharger (30, 40) of the internal combustion engine (1);
a first inflow (153) fluidly connected to the main exhaust gas path (54) and configured to direct exhaust gas from the wastegate system (70) into the main exhaust gas path (54); and
a second inflow (83) fluidly connected to the main exhaust gas path (54) and configured to direct compressed air from the blow-off system (80) into the main gas path (54).

2. The exhaust gas stub (50, 60) of claim 1, wherein the first inflow (153) is disposed at the main body (52) opposite to the second inflow (83).

3. The exhaust gas stub (50, 60) of any one of claims 1 and 2, wherein the first inflow (153) is arranged in parallel to the second inflow (83).

4. The exhaust gas stub (50, 60) of any one of the preceding claims, wherein the exhaust gas stub (50, 60) may be made of a heat-resisting stainless steel.

5. The exhaust gas stub (50, 60) of claim 4, wherein the heat resisting stainless steel has the material number 1.5415.

6. The exhaust stub (50, 60) of any one of the preceding claims, wherein the main exhaust gas path (54) may have a diameter in a range from about 60 cm to 110 cm.

7. The exhaust gas sub (50, 60) of any one of the preceding claims, wherein the first inflow (153) may have a diameter in a range from about 10 cm to 20 cm, and the second inflow (83) may have a diameter in a range from about 10 cm to 15 cm.

8. The exhaust gas stub (50, 60) of any one of the preceding claims, wherein the distance from the inlet (56) to the outlet (58) is in range from about 40 cm to 80 cm.

9. An internal combustion engine (1) including at least one cylinder (16A to 16D, 26A to 26D) comprising:
at least one intake manifold (12, 22) fluidly connected to the at least one cylinder (16A to 16D, 26A to 26D);
at least one exhaust manifold (14, 24) fluidly connected to the at least one cylinder (16A to 16D, 26A to 26D);
at least one turbocharger (30, 40) including a turbine (32, 42) fluidly connected to the exhaust manifold (14, 24), and a compressor (34, 44) fluidly connected to the intake manifold (12, 22);
a wastegate system (70) fluidly connected to the at least one exhaust manifold (14, 24);
a blow-off system (80) fluidly connected to the at least one intake manifold (12, 22); and
at least one exhaust gas stub (50, 60) of any one of the preceding claims, wheren the exhaust gas stub (50, 60) is fluidly connected to the turbine (32, 42) and configured to receive exhaust gas from the turbine (32, 42) and the wastegate system (70) and air from the blow off system (80).

10. The internal combustion engine (1) of claim 9, wherein the internal combustion engine (1) is an in-line type internal combustion engine

11. The internal combustion engine (1) of claim 9, wherein the internal combustion engine (1) is a V-type internal combustion engine comprising a first cylinder bank (10) having at least one cylinder (16A to 16D) and a second cylinder bank (20) having at least one cylinder (26A to 26D), the V-type internal combustion engine further comprising:
a first exhaust gas stub (50) of any one of claims 1 to 8 fluidly connected to a first turbine (32) of a first turbocharger (30) configured to compress air for the at least one cylinder (16A to 16D) of the first cylinder bank (10), and
a second exhaust gas stub (60) of any one of claims 1 to 8 fluidly connected to a second turbine (34) of a second turbocharger (40) configured to compress air for the at least one cylinder (26A to 26D) of the second cylinder bank (10), wherein the first exhaust gas stub (50) is configured to receive exhaust gas from the first turbine (32) and the wastegate system (70) and air from the blow-off system (80), and the second exhaust gas stub (60) is configured to receive exhaust gas from the second turbine (42) and the wastegate system (70) and air from the blow-off system (80).

12. A method for operating an internal combustion engine (1) including at least one turbocharger (30, 40) having a turbine (32, 42), a wastegate system (70) for directing exhaust gas, a blow-off system (80) for directing air, and at least one exhaust gas stub (50, 60) fluidly connected to the turbine (32, 42), the method comprising:
directing exhaust gas through the turbine (32, 42) into the at least one exhaust gas stub (50, 60);
directing exhaust gas from the wastegate system (70) into the at least one exhaust gas stub (50, 60), thereby bypassing the turbine (32, 42); and
directing air from the blow-off system (70) into the at least one exhaust gas stub (50, 60).
